# EUROPÄISCHE PATENTSCHRIFT

(11) **EP 2 461 955 B1**
(45) Veröffentlichungstag und Bekanntmachung des Hinweises auf die Patenterteilung: **13.11.2013**
(21) Anmeldenummer: 10739870.3
(22) Anmeldetag: 31.07.2010
(51) Int. Cl.: B29B 7/88, B29B 7/08, B29B 7/12, B29B 9/10, C08J 3/20

(54) **HERSTELLUNG VON ADDITIVIERTEN FORMKÖRPERN**
PRODUCING MOLDED BODIES CONTAINING ADDITIVES
PRODUCTION DE CORPS MOULÉS CONTENANT DES ADDITIFS

(30) Priorität: 03.08.2009 IT RM20090419; 03.08.2009 IT RM20090418
(43) Veröffentlichungstag der Anmeldung: 13.06.2012
(73) Patentinhaber: Bayer Intellectual Property GmbH, 40789 Monheim (DE)
(72) Erfinder: HORN, Klaus, 41540 Dormagen (DE); ZÖLLNER, Olaf, 51375 Leverkusen (DE); MALVESTITI, Gianmaria, 24041 Brembate (IT); SCAGNELLI, Andrea, I-24040 Bonate Sotto (IT); TIRONI, Massimo, I-24048 Treviolo (IT)
(74) Vertreter: BIP Patents
(86) Internationale Anmeldenummer: PCT/EP2010/004696
(87) Internationale Veröffentlichungsnummer: WO 2011/015320

(56) Entgegenhaltungen:
- WO-A1-99/65656
- WO-A1-2004/056551
- WO-A1-2007/059767
- DE-A1-102006 024 724
- US-A- 3 591 409
- US-A- 5 756 020
- US-A1- 2003 007 239
- US-A1- 2004 043 147
- US-A1- 2008 197 523
- US-B1- 7 188 993

## Beschreibung

Die vorliegende Erfindung betrifft ein Verfahren zur beschleunigten Herstellung von additivierten thermoplastischen Formkörpern in reproduzierbarer Qualität, insbesondere zur beschleunigten Herstellung von gefärbten thermoplastischen Formkörpern in hoher Farbkonstanz.

Die Einmischung von Additiven in Thermoplasten erfolgt üblicherweise durch Extrusion auf einem Compoundierungsextruder. Im günstigsten Fall können auch sogenannte Masterbatche zu dem nicht additivierten Thermoplasten gegeben werden, in die die gewünschten Additive vorher in möglichst hoher Konzentration eincompoundiert wurden. In beiden Fällen muss der thermoplastische Kunststoff vollständig oder teilweise vor der eigentlichen Verarbeitung zum Formkörper zur Compoundherstellung extrudiert werden, was einerseits zeitaufwändig und kostspielig ist, andererseits auch eine zusätzliche thermische Belastung des Thermoplasten bedeutet, die zu Abbaureaktionen führen kann. Gerade wenn thermoplastische Kunststoff-Additiv-Mischungen mit vielen unterschiedlichen Konzentrationen hergestellt werden sollen, können sich die benötigten vielen einzelnen Herstellungs- und Reinigungsschritte beträchtlich summieren. Insbesondere trifft das für die Farbeinstellung von Additiv-Thermoplast-Mischungen zu, wo viele verschiedene Farbmusterplättchen in hoher und reproduzierbarer Qualität hergestellt werden.

Es hat daher nicht an Versuchen gemangelt, den Prozess der Additiveinmischung in Thermoplasten zu optimieren.

Um möglichst einheitliche Komposite herstellen zu können, schlägt die US 2008/0197523 A1 ein kontinuierliches Herstellverfahren unter Verwendung eines spezifischen Dosierungssystems in Kombination mit einem Vorwärmer und einem Extruder vor. Die Verarbeitung der Vormischungen auf einer Spritzgießmaschine wird zwar auch erwähnt, jedoch gelingt die Herstellung von homogenen Kompositen Kunststoff-Additiv-Mischungen über dieses Verfahren auf einer Standardspritzgießmaschine nicht in befriedigender Qualität.

Die DE 197 10 610 A1 offenbart ein Spritzgießverfahren zur Herstellung von pigmentierten oder füllstoffhaltigen Formkörpern aus Mischungen von Polymeren und Pigmenten und/oder Füllstoffen unter Verwendung einer modifizierten Spritzgießmaschine, wobei die Ausgangsstoffe der Mischung vor dem Spritzgießen außerhalb der Spritzgießmaschine in mechanischen Mischern oder in Behältern auf Walzenstühlen miteinander vermischt werden und diese Mischung anschließend in der Spritzgießmaschine aufgeschmolzen und verarbeitet wird. Hierbei wird eine Spritzgießmaschine mit einer speziellen Entgasungsschnecke mit Schersteg verwendet und die Mischung wird mit der Schnecke nachgeschalteten Mischelementen homogenisiert. Nachteil dieses Verfahrens ist, dass durch das mechanische Mischen die Polymere und Additive statisch aufgeladen werden und Reste von Additiven an den Wandungen der Mischungsgefäße verbleiben. Diese Restmengen fehlen in den hergestellten Formteilen und verfälschen speziell bei der Farbnachstellung das Ergebnis. Auch wird die Schmelze durch die notwendige Verwendung eines Scherstegs zusätzlich belastet. Weiterhin erfordert dieses Verfahren einen hohen Aufwand bei der nachgeschalteten Reinigung der Mischungsgefäße.

In der DE 44 43 153 A1 wird ein Verfahren zur Herstellung von Formteilen oder Formkörpern aus Mischungen von Polymeren mit Hilfe des Spritzgießverfahrens offenbart, bei dem die Ausgangsstoffe der Mischung vor dem Spritzgießen außerhalb der Spritzgießmaschine intensiv miteinander vermischt werden und die Mischung anschließend in der Spritzgießmaschine aufgeschmolzen und verarbeitet wird, wobei die Mischung aus wenigstens zwei oder mehreren Polymeren besteht, von denen mindestens eines thermoplastisch ist, die Ausgangsstoffe der Mischung vor dem Spritzgießen bei einer Temperatur unterhalb des Schmelzpunktes der Polymerkomponente mit dem niedrigsten Schmelzpunkt pulverförmig miteinander vermischt werden und die hergestellten Formteile oder Formkörper insbesondere farbhell oder farblos sind. Die Herstellung der Gemische erfolgt in an sich üblichen mechanischen Mischern. Um zu verhindern, dass sich die Komponenten der Gemische vor dem Spritzgießen entmischen, müssen die Gemische jedoch im Trichter der Spritzgießmaschine ständig durch Rühren umgewälzt oder nach dem Mischen zu granulatartigen, z.B. linsenförmigen Presslingen geformt werden. Die zusätzliche Verwendung von besonderen Misch- und Schervorrichtungen wird empfohlen. Bei diesem Verfahren müssen die Einsatzstoffe vorab intensiv mechanisch gemischt werden mit den gleichen Nachteilen wie bei der DE 197 10 610 A1. Zusätzlich muss aufwändig die Entmischung der Mischungen durch ständiges rühren im Trichter der Spritzgießmaschine oder sogar durch aufwändiges Anfertigen von linsenförmigen Presslingen verhindert werden.

In das erfindungsgemäße, neue Verfahren lassen sich auch Kunststoffgranulate einsetzen, ein Mahlen ist nicht mehr notwendig. Trotzdem ist es auch insbesondere für die Herstellung von gefärbten Kunststoffen geeignet und liefert Qualitäten, mit denen sich Farbmusterplättchen herstellen lassen.

Die WO 00/73752 A1 beschreibt ein Verfahren zur Einfärbung oder Compoundierung von Thermoplasten oder Thermosets direkt während eines Spritzgieß- oder Blasformprozesses. Bei dem Verfahren wird zunächst die intrinsische Farbe des einzufärbenden Polymers gemessen und mit einem Muster der zu erhaltenden Farbe verglichen, um die exakte qualitative und quantitative Zusammensetzung der benötigten Farbmittel zu bestimmen. Im zweiten Schritt werden dann die benötigten Farbmittel und gegebenenfalls Additive eingewogen und mit einem Rotationsmischer vermischt. In einem dritten Arbeitsschritt wird diese Mischung in eine geeignete Dosiervorrichtung überführt und in definierten Mengen einem Strom aus Thermoplasten und/oder Thermosets zugeführt. Im vierten und letzten Arbeitsschritt erfolgt dann das Spritzgießen oder Blasformen des Materials. Dieses Verfahren ist gekennzeichnet durch vier Arbeitsschritte, die einen hohen Zeit- und Koordinationsaufwand bedingen. Auch schwanken bei Verwendung von Dosiervorrichtungen stets die dosierten Additivmengen in gewissen Toleranzen, so dass beispielsweise bei der Additivierung mit Farbmitteln die Farbkonstanz von Formteil zu Formteil nicht gewährleistet ist.

Die WO 03/018287 A2 offenbart Verfahren und Vorrichtungen zur schnellen Erzeugung von homogenen Gemischen aus Mehrkomponentensystemen, z.B. Kunststoffmischungen, und zur Erzeugung und Prüfung von Formkörpern daraus. Eine Vorrichtung zur Formkörpererzeugung wird ebenfalls offenbart. Hierbei wird im ersten Mischschritt zunächst ein Primärstrom einer Komponente erzeugt, zu dem dann weitere Komponenten über einen oder mehrer Sekundärströme beigemischt und so zu einem Vorgemischstrom vereinigt werden. Dieser Vorgemischstrom wird sodann durch eine Mischeinrichtung mit radialer Mischwirkung hindurch weitergefördert. Auch bei diesem Verfahren ist nachteilig, dass die Komponenten durch verschiedene Ströme zugeführt werden, so dass gewisse Dosierschwankungen auftreten, die beispielsweise bei der Herstellung definierter gefärbter Formkörper zu Abweichungen der farbmetrischen Messwerte der Formteile untereinander führen. Das offenbarte Verfahren ist außerdem technisch aufwändig.

Seit einiger Zeit sind Mischer bekannt, die nach dem sogenannten Resonanz-Vibrations Prinzip arbeiten. In der US 7,188,993 B1 sowie in der WO 2008/088321 A1 werden ein Apparat sowie ein Verfahren für das Mischen nach diesem Verfahren beschrieben. In der Produktbroschüre wird das Mischen von Polyethylen-Granulaten mit Carbon Black - Pulver beschrieben. In der WO-A 99/65656 werden offenporig poröse Polymere mit sehr feinteiligen Feststoffen gefüllt und ggf. anschließend mit Flüssigkeiten beschichtet. Üblicherweise weisen Kunststoffe, insbesondere die im Rahmen der vorliegenden Erfindung verwendeten, jedoch eine solche Porösität nicht auf. Auch wird in der WO-A 99/65656 kein Spritzgießverfahren beschrieben. Somit ergibt sich aus dem Stand der Technik nicht, dass und auf welche Weise sich mit nach dem Resonanz-Vibrations-Prinzip arbeitenden Mischern hergestellte thermoplastische Kunststoff-Additiv-Mischungen zu Formkörpern mit homogener Additivverteilung verarbeiten lassen.

Der Erfindung liegt somit die Aufgabe zugrunde, ein Verfahren anzugeben, mit welchem sich auf einfache und schnelle Weise additivierte thermoplastische Formteile mit sehr hoher Qualität und Farbkonstanz herstellen lassen.

Die Aufgabe wird erfindungsgemäß mit einem Verfahren nach Anspruch 1 gelöst.

Überraschenderweise wurde gefunden, dass sich homogen additivierte thermoplastische Kunststoffformkörper, die höchsten Qualitätsanforderungen, wie sie bei der Farbeinstellung und -nachstellung gestellt werden, genügen, durch das erfindungsgemäße Verfahren herstellen lassen.

Die Herstellung der Vormischung erfolgt mit Hilfe eines Mischers ohne mechanische Mischelemente. Unter mechanischen Mischelementen werden Mischstäbe, Mischpropeller, Knethaken oder ähnliches verstanden.

Die vorhergehende Compoundierung zur Homogenisierung der Additive und Farbmittel ist bei diesem Verfahren nicht notwendig.

Die im Rahmen der vorliegenden Erfindung eingesetzten Mischer ohne mechanische Mischelemente arbeiten nach dem Resonanz-Vibrations-Prinzip. Hierbei wird die Mischung durch einen Oszillator in Resonanz gebracht. Die Mischungen werden mit Frequenzen von > 16 Hz und < 1000 Hz erzeugt. Der entsprechende Apparat sowie zugehörige Mischverfahren sind in der US 7,188,993 B1 sowie in der WO 2008/088321 A1 detailliert beschrieben.

Bevorzugt werden die Mischungen mit Frequenzen zwischen 30 und 600 Hz erzeugt, ganz besonders bevorzugt zwischen 40 und 200 Hz.

Nach dem Resonanz-Vibrations-Prinzip arbeitende Mischer sind unter der Bezeichnung ResonantAcoustic^{®} Mixer in verschiedenen Ausführungen kommerziell über die Firma Resodyn Acoustic Mixers Inc., 130 N. Main St., Suite 630, Butte, Montana 59701 erhältlich.

Als Ausgangsstoffe zur Herstellung der Vormischung in Schritt a.) sind alle thermoplastischen Polymere geeignet, beispielsweise Polyamid (PA), Polyester, insbesondere Polyethylenterephthalat (PET), Polybutylenterephthalat (PBT), Polyacrylate, insbesondere Polymethylmethacrylat (PMMA), Polystyrol (PS), syndiotaktisches Polystyrol, Acrylnitril-Butadien-Styrol (ABS), Acrylester-Styrol-Acrylnitril (ASA), Polyolefin, insbesondere Polypropylen (PP), Polyethylen (PE), Polycarbonat (PC), Copolycarbonat (CoPC), Copolyestercarbonat oder eine Mischung dieser Kunststoffe. In einer bevorzugten Ausführungsform handelt es sich bei den Kunststoffen um amorphe thermoplastische Kunststoffe, insbesondere um Polycarbonat, Copolycarbonat, Copolyestercarbonat und Polycarbonat - Mischungen bestehend aus Polycarbonat und Acrylnitril-Butadien-Styrol (ABS), Acrylester-Styrol-Acrylnitril (ASA), Polybutylenterephthalat (PBT) und Polyethylenterephthalat (PET).

Die thermoplastischen Polymere werden in Form von Granulaten und/oder Pulvern eingesetzt. Bei den üblicherweise zur Verwendung kommenden Granulaten kann es sich um Granulate hergestellt aus einem Polymerstrang (Stranggranulate) handeln oder um solche die mit einer Unterwassergranulierung (Unterwassergranulate) hergestellt sind. Die Pulver können durch Mahlen der Granulate oder auch durch Fällung aus Polymerlösungen hergestellt werden.

Die Additive werden in Form der handelsüblichen Feststoffpulver, Öle und/oder Pasten sowie in Form von Flüssigkeiten eingesetzt. Beispielsweise lassen sich über dieses Verfahren die folgenden Additive einbringen: Farbmittel, d.h. anorganische und organische Farbstoffe und Pigmente, Entformungmittel, Gleitmittel, Fließmittel, UV-Schutzmittel, IR-Absorber, Flammschutzmittel, optische Aufheller, anorganische und organische Streupartikel, Antistatika, Thermostabilisatoren, Nukleierungsmittel, Füllstoffe, Glaskugeln, Glas- und Kohlenstofffasern, Schlagzähmodifikatoren und Carbonanotubes. Die Farbstoffe und Pigmente können organisch oder anorganisch sein, beispielsweise Titandioxid, Bariumsulfat und Zinkoxid. Eingesetzt werden auch Ruß und Metallflitter. Beispiel für polymere Streupartikel sind Polyacrylate und PMMA, beispielsweise Kern-Schale-Acrylate, Polytetrafluoroethylene, Polyalkyltrialkoxysiloxane und Mischungen aus diesen Komponenten. UV-Absorber gehören beispielsweise zu den Klassen Benzotriazole, Oxalanilide, 2-Cyanacrylate, Benzilidinmalonate und Formamidine sowie Benzophenone, insbesondere Dibenzolyresorcine, und Triazine, insbesondere 2-(2-Hydroxyphenyl)-1,3,5-triazine.

Prinzipiell unterliegt die Auswahl der Additive, die sich über dieses Verfahren einbringen lassen, keinen Beschränkungen. Weitere mögliche Additive werden z.B. in WO 99/55772, S. 15 - 25, EP-A 1 308 084 und in den entsprechenden Kapiteln des "Plastics Additives Handbook" , ed. Hans Zweifel, 5th Edition 2000, Hanser Publishers, Munich beschrieben.

Die Gesamtmenge der Additive im Polymer beträgt 0,000001 Gew.-% bis 50,000000 Gew.-%, bevorzugt 0,001 Gew. % bis 40,000 Gew.-% besonders bevorzugt 0,01 Gew. % bis 30,00 Gew.-%. Entsprechend beträgt der Anteil an thermoplastischem Polymer in der Zusammensetzung 50,000000 Gew.-% bis 99,999999 Gew.-%, bevorzugt 60,000 Gew.-% bis 99,999 Gew.-% besonders bevorzugt 70,00 Gew.-% bis 99,99 Gew.-%.

Die Granulate im Sinne der Erfindung sind zylindrische bis kugelförmige Granulate. Die zylindrischen Granulate sind von 0,5 mm bis 10,0 mm, vorzugsweise von 1 mm bis 5 mm und besonders bevorzugt von 2 bis 4 mm lang und haben einen Durchmesser von 0,5 mm bis 6,0 mm, bevorzugt von 1 mm bis 4 mm und besonders bevorzugt von 2 bis 3 mm. Sie haben ein 100 Korngewicht (definiert als durchschnittliches Gewicht von 100 Granulatkörnern) von 1,0 g bis 4,0 g.

Die kugelförmigen Granulate haben einen Durchmesser von 0,5 mm bis 6,0 mm, bevorzugt von 1 mm bis 4 mm und besonders bevorzugt von 2 bis 3 mm sowie ein 100 Korngewicht von 1,0 g bis 4,0 g.

Pulver der thermoplastischen Polymere im Sinne der Erfindung bestehen aus Teilchen mit unregelmäßiger Geometrie. Die Teilchengrößen liegen im Bereich von 0,01 mm bis 5,00 mm, bevorzugt von 0,1 mm bis 2,0 mm.

Die Teilchengrößenverteilung kann monomodal bis multimodal sein, bevorzugt sind monomodale und bimodale Verteilungen.

Pulver der Additive und Farbmittel im Sinne der Erfindung bestehen aus Teilchen mit unregelmäßiger Geometrie. Die Teilchengrößen liegen im Bereich von 0,01 mm bis 2,00 mm, bevorzugt von 0,01 mm bis 1,00 mm und ganz besonders bevorzugt 0,01 mm bis 0,05 mm.

Die Teilchengrößenverteilung kann monomodal bis multimodal sein, bevorzugt sind monomodale und bimodale Verteilungen.

Erfindungsgemäße Additive sind auch Nanotubes, bevorzugt Carbonnanotubes (CNT).

Die nach dem Resonanz-Vibrations-Prinzip hergestellten Mischungen aus thermoplastischen Polymeren und Additiven sind dadurch charakterisiert, dass die auf die Oberflächen der Granulate bzw. der gemahlenen Granulatpartikel aufgetragenen Additive fest anhaften, so dass eine nahezu staubfreie Mischung erzielt wird. Die so hergestellten Mischungen lassen sich daher sauber aus dem Mischungsgefäß ausbringen, ohne dass Reste von Additiven im Mischungsgefäß verbleiben. So wird gewährleistet, dass die Vormischung zu thermoplastischen Formkörpern verarbeitet werden können, die die angestrebte Konzentration der Additiven, Pigmenten und Farbstoffen enthalten und das Mischungsgefäß nicht gereinigt werden muss um weitere spezifikationsgerechte Mischungen herstellen zu können.

Zur Herstellung der thermoplastischen Formkörper aus den erfindungsgemäßen Vormischungen werden Spritzgießmaschinen mit dynamischen oder statischen Mischelementen verwendet.

Ein Beispiel für einen dynamischen Mischer ist der Twente Mixing Ring (TMR), der anstatt einer Standardrückstromsperre auf die Schnecke geschraubt wird. Besonders bevorzugt sind die kurzen Varianten mit einer Vergrößerung des Winkels der Dichtfläche von 30° auf 90°.

Die statischen Mischer bestehen aus mehreren gleichartigen, freistehenden Mischelementen, die unter Versatz der einzelnen Elemente um definierte Winkel in den Schmelzeströmungskanal eingebaut sind, bevorzugt in die Düse des Plastifizieraggregats. Die einzelnen Mischelemente bestehen aus Leitblechen oder Leitstegen, Leitwendeln oder Bohrungsbündeln, die das strömende Medium (Schmelze) in Teilströme aufteilen, deren radiale Position im Strömungskanal und die Lage zueinander stets verändern und somit zu einer Homogenisierung der Einzelkomponenten führen. Eine bevorzugte Variante eines statischen Mischers wird im Feinguss hergestellt. Durch die dabei optimierte Geometrie entstehen kürzere Verweilzeiten, keine Totstellen und eine verbesserte Mischwirkung. Auch statische Mischer, bei denen die Schmelze durch zwei oder mehrere Wendelkanäle geleitet wird, die am Ende wieder zusammen laufen, sind geeignet.

Statische Mischer sind z.B. von den Firmen Sulzer-Chemtech (P.O. Box 65 CH-8404, Winterthur, Schweiz) oder Fluitec (Seuzachstrasse 38, CH-8413 Neftenbach, Schweiz) kommerziell erhältlich.

Gegenstand der Erfindung ist somit ein Verfahren zur beschleunigten Herstellung von additivierten thermoplastischen Formkörpern, bei welchem es sich um eine Kombination eines speziellen Mischprozesses, der das Resonanz-Vibrations-Prinzip ausnutzt, mit einem modifizierten Spritzguss-Prozess, bei dem der Spritzgießschnecke ein dynamischer und/oder statischer Mischer und nachgeschaltet wird, handelt. Das erfindungsgemäße Verfahren erlaubt die Herstellung von additivierten, eingefärbten Formkörpern in hoher und reproduzierbarer, homogener Qualität, ohne dass eine vorgeschaltete Homogenisierung der Polymeren mit den Additiven auf einem Extruder in der Schmelze und anschließende Granulierung durchgeführt werden muss, und die daraus resultierenden Granulate erst dann einem Spritzgussprozess zur Herstellung von thermoplastischen Formkörpern unterzogen werden können.

Mit Hilfe des Verfahrens enthaltend die Schritte a.) und b.) lassen sich der benötigte Aufwand und die benötigte Zeit zur Herstellung von additivierten Formkörpern gegenüber dem Standardprozess um mindestens 25 % reduzieren.

Das Verfahren ist dadurch charakterisiert, dass die Standardabweichung der farbmetrischen Daten der Farbmusterplatten untereinander < 0,1% ist.

Der Akustikmischer lässt sich ebenfalls auf vorteilhafte Weise in einem Verfahren zur Herstellung von additivierten thermoplastischen Formkörpern einsetzen, welches die folgenden Schritte enthält:
i.) Herstellung einer Vormischung, enthaltend als Komponenten mindestens einen thermoplastischen Kunststoff und einen oder mehrere Additive.
ii.) Thermoplastische Verarbeitung der Vormischung auf einer Einwellen- oder Doppelwellenextruder.

Dieses Verfahren eignet sich insbesondere für Additive, die sich ansonsten nur schwierig im Extrusionsverfahren einarbeiten lassen. D.h. über dieses Verfahren enthaltend die Schritte i) und ii) lassen sich aus thermoplastischen Kunststoffen und Additiven thermoplastische Extrudate (Stränge, Granulate, Platten, Folien, Schläuche, Profile oder Extrusionsblasformen) herstellen, welche besonders homogen sind.

### Beispiele:

Die vorliegende Erfindung soll anhand der Beispiele näher erläutert werden. Hierzu wurden die Mischungen aus einem Polycarbonat und Farbpigmenten wie in Tab. 1 beschrieben eingesetzt.

Bei dem Polycarbonat handelte es sich in allen Fällen mit Makrolon® 3108 um ein nicht additiviertes lineares Polycarbonat auf Basis von Bisphenol-A mit einer Schmelze-Volumenfließrate (MVR) nach ISO 1133 von 6,0 cm³/(10min), gemessen bei 300 °C und 1,2 kg Belastung.

Die Mischungen wurden anschließend sowohl nach dem erfindungsgemäßen Verfahren (A) als auch mit alternativen technischen Verfahren (B - D) zu Farbmusterplatten verarbeitet und anschließend bezüglich ihrer Farbqualität untersucht (siehe Tabelle 2).

### Beschreibung der Verfahren:

### A) Erfindungsgemäße Technologie:

### Herstellung der Polymer / Farbmittel - Mischungen:

Das Polycarbonatpulver bzw. Granulat wird vor der Herstellung der Mischungen bei 120°C 4 Stunden lang in einem Trockenlufttrockner getrocknet und anschließend zusammen mit den Farbmitteln in einem verschließbaren Gefäß mit dem Akustikmischer LabRAM Resonant Acoustic®Mixer 3 Minuten lang bei einer Frequenz von 40 bis 60 Hz gemischt, wobei der Akustikmischer die optimale Frequenz automatisch einstellt bei der der Resonanzfall eintritt.

Gesamte Ansatzgröße:Größe des Einzelansatzes bei Verfahren A: je 500 g

### Herstellung der Farbmusterplatten:

Die Farbmusterplatten werden im Spritzgussprozeß auf einer Arburg 370S 800 - 150 hergestellt. Die Maschine ist mit einer Kombination aus statischen Mischern der Firma Sulzer vom Typ SMK-X DN 12 (mit 6 Elementen) und SMK-X DN 12 (mit 2 Elementen) ausgerüstet. Die Schließkraft der Maschine liegt bei 800 kN. Der Schneckendurchmesser beträgt 25 mm. Die Platten werden bei einer Schmelzetemperatur von 300°C und einer Werkzeugtemperatur von 90°C hergestellt. Die Polymer/Farbmittel-Mischung wird in den Einzugstrichter gegeben, in der Schnecke aufgeschmolzen und zu Farbmusterplatten verarbeitet (75x50x4mm). Die Farbmusterplatten werden dann der Farbmessung unterzogen.

### B) Standardtechnologie

Das Polycarbonatgranulat und das Polycarbonatpulver werden vor der Herstellung der Mischungen jeweils bei 120°C 4 Stunden lang in einem Trockenlufttrockner getrocknet. Das Polycarbonatpulver wird anschließend zusammen mit den Farbmitteln in einem Mixako - Mischer Container Mixer LAB CM 3 -12 CC/MB 3 Minuten. lang gemischt. Die Polycarbonatpulver - Farbmischung und die Polycarbonatgranulate werden über je eine Waage mittels je eines Trichters in einen Doppelwellenextruder (ZSK 25) der Firma Coperion dosiert, auf 300°C aufgeschmolzen und extrudiert. Anschließend werden die Polymerstränke mit einem Stranggranulator zu Granulatkörnern geschnitten.

Größe des Einzelansatzes bei Verfahren B (Extruderverfahren, Standardtechnologie): je5 kg

Die Granulatkörner werden bei 120°C 4 Stunden lang in einem Trockenlufttrockner getrocknet. Anschließend werden die Granulatkörner auf einer konventionellen Spritzgießmaschine (Arburg 370S 800 - 150) bei 300°C aufgeschmolzen und zu Farbmusterplatten (75x50x4mm) verarbeitet. Die Farbmusterplatten werden dann der Farbmessung unterzogen.

### Gesamte Ansatzgröße: 5 kg

### C) Verfahren mit statischen Mischelementen auf der Spritzgießmaschine unter Verwendung eines Taumelmischers (kein Akustikmischer)

Das Polycarbonatpulver (Granulate) werden vor der Herstellung der Mischungen bei 120°C 4 Stunden in einem Trockenlufttrockner getrocknet und anschließend zusammen mit den Farbmitteln in einem Taumelmischer LBB Bohle LM 40 3 Minuten. lang gemischt.

### Größe des Einzelansatzes bei Verfahren C: je 500 g

Die Farbmusterplatten werden im Spritzgussprozess auf einer Arburg 370S 800 - 150 hergestellt. Die Maschine ist mit einer Kombination aus statischen Mischern der Firma Sulzer vom Typ SMK-X DN 12 (mit 6 Elementen) und SMK-X DN 12 (mit 2 Elementen) ausgerüstet. Die Schließkraft der Maschine liegt bei 800 kN. Der Schneckendurchmesser beträgt 25 mm. Die Platten werden bei einer Schmelzetemperatur von 300°C und einer Werkzeugtemperatur von 90°C hergestellt. Die Mischung wird in den Einzugstrichter gegeben aufgeschmolzen und zu Farbmusterplatten verarbeitet (75x50x4mm). Die Farbmusterplatten werden dann der Farbmessung unterzogen.

Gesamte Ansatzgröße: 500 g

### D) Ohne Verfahren ohne Akustikmischer und ohne statische Mischelemente auf der Spritzgießmaschine

Das Polycarbonatgranulat und das Polycarbonatpulver werden vor der Herstellung der Mischungen bei 120°C 4 Stunden lang in einem Trockenlufttrockner getrocknet. Das Polycarbonatpulver (Granulat) wird anschließend zusammen mit den Farbmitteln in einem Taumelmischer LBB Bohle LM 40 3 Minuten. lang gemischt.

Größe des Einzelansatzes bei Verfahren D: je 500 g

Anschließend werden die Mischungen auf einer konventionellen Spritzgießmaschine (Arburg 370S 800 - 150) bei 300°C aufgeschmolzen und zu Farbmusterplatten (75x50x4mm) verarbeitet. Die Farbmusterplatten werden dann der Farbmessung unterzogen.

Gesamte Ansatzgröße: 500 g

### E) Austestung durch Farbmessung:

Die Farbmessung wurde an allen Platten unabhängig nach dem Verfahren der Herstellung der Platten in gleicher Vorgehensweise nach Norm DIN 6174 durchgeführt.

Opake Farben werden mit einer Geometrie 45/0° und einem Messintervall von 10 nm gemessen. Für die Messung der opaken Farben wurde das Gerät Color - Eye 2145 der Firma Gretag MacBeth verwendet.

Transparente Farben werden mit der Geometrie d/8° mit einem Messintervall von 5 nm gemessen. Für die Messung der transparenten Farben wurde das Gerät Ultrascan PRO der Firma HunterLab verwendet.

**Tabelle 1: Zusammensetzungen der Beispiele; * alle Mengenangaben jeweils in Gew.-%**

| **Komponente der Farbzusammensetzung** | **Hersteller** | **CAS-Nr.** | **Farb-Index** | **Beispiel 1*** | **Beispiel 2*** | **Beispiel 3*** | **Beispiel 4*** | **Beispiel 5*** | **Beispiel 6*** |
|---|---|---|---|---|---|---|---|---|---|
| Makrolong® 3108 | Bayer MaterialScience AG | | - | 98,8988 | 98,8900 | 99,5280 | 99,1270 | 98,6686 | 99,7960 |
| Heucodur® Yellow 6R | Heubach | 068186-90-3 | Pigment Brown 24 | -- | -- | 0,0540 | | | |
| Macrolexviolett 3R® | Lanxess AG | 0000082-16-6 | Solvent Violet 36 | -- | -- | 0,0040 | | | |
| Carbon Black® 4350 | Cabot Corp. | 001333-86-4 | Pigment Black 7 | -- | -- | 0,0340 | | | |
| Titan Kronos® 2230 | Kronos Titan AG | 013463-67-7 | Pigment White 6 | 1,0500 | 0,9000 | 0,380 | 0,5300 | 0,9600 | |
| Sicotan Yellow® K1010 | BASF AG | 008007-18-9 | Pigment Yellow 53 | 0,0450 | 0,1730 | -- | | | |
| Colortherm® Red 130M | Lanxess AG | 001309-37-1 | Pigment Red 101 | 0,0020 | 0,0120 | -- | | 0,0140 | |
| Lamp Black® 101 | Degussa AG | 77266 | Pigment Black 7 | 0,0042 | 0,0250 | -- | | | |
| Sicotan® Yellow K2107 | BASF AG | 068186-90-3 | Pigment Brown 24 | -- | -- | -- | | 0,3300 | |
| Colortherm® Yellow 30 | Bayer AG | 68187-51-9 | Pigment Yellow 119 | -- | -- | -- | | 0,0230 | |
| Elftex® 570 pearls | Cabot | 001333-86-4 | Pigment Black 7 | -- | -- | -- | | 0,0044 | |
| Sicotan® Yellow K1010 | BASF AG | 008007-18-9 | Pigment Yellow 53 | -- | -- | -- | 0,0330 | | |
| Ultramarine Blue Premier FRX® | Holiday Pigments | 057455-37-5 | Pigment Blue 29 | -- | -- | -- | 0,3000 | | |
| Pemcolor® Green 405 | Pemco Emails | 0681R6-85-6 | Pigment Green 50 | -- | -- | -- | 0,0100 | | |
| Macrolex® Gelb 3G | Lanxess AG | 004174-09-8 | Solvent Yellow 93 | -- | -- | -- | | | 0,2000 |
| Heliogen Blau® K 6911 D | BASF AG | 000147-14-8 | Pigment Blue 15:1 | -- | -- | -- | | | 0,0040 |

**Tab. 2) Herstellung der Farbmusterplatten und Beurteilung der Farbqualität:**

| **Farb- Muster- platten** | **Farb- rezeptur Beispiel** | **Farbeindruck nach Austestung E** | **Herstell-verfahren gem.** | **Cielab Farb-System** | | | **Standard Abweichung** | | | **Beobachtungen** |
|---|---|---|---|---|---|---|---|---|---|---|
| **Beispiel** | | | | **L*** | **a*** | **b*** | **σL*** | **σ8*** | **σb*** | |
| 7 | 1 | RAL 7035-Opak Hellgrau | A | 81,00 | -1,15 | 1,99 | 0,02 | 0,02 | 0,03 | |
| 8 | 1 | RAL 7035-Opak Hellgrau | B | 80,65 | -1,28 | 2,45 | 0,06 | 0,02 | 0,06 | |
| 9 | 1 | RAL 7035-Opak Hellgrau | D | 80,85 | -1,27 | 2,33 | 0,15 | 0,08 | 0,21 | Farbschlieren auf der Oberfläche |
| 10 | 1 | RAL 7035-Opak Hellgrau | C | 81,59 | -0,75 | 2,44 | 0,11 | 0,03 | 0,05 | |
| 11 | 2 | RAL 7045- Opak Mittelgrau | A | 61,92 | -0,90 | 0,75 | 0,02 | 0,03 | 0,06 | |
| 12 | 2 | RAL 7045- Opak Mittelgrau | D | 60,68 | -1,02 | 1,09 | 0,44 | 0,16 | 0,58 | Farbschlieren auf der Oberfläche |
| 13 | 2 | RAL 7045- Opak Mittelgrau | C | 61,42 | -0,87 | 0,55 | 0,26 | 0,03 | 0,08 | Farbschlieren auf der Oberfläche |
| 14 | 3 | RAL 7015 - Opak Dunkelgrau | A | 29,46 | -0,31 | -2,56 | 0,09 | 0,02 | 0,02 | |
| 15 | 3 | RAL 7015-Opak Dunkelgrau | B | 26,62 | -0,41 | -2,62 | 0,05 | 0,02 | 0,02 | |
| 16 | 3 | RAL 7015-Opak Dunkelgrau | C | 29,38 | -0,29 | -1,8 | 1,09 | 0,05 | 0,37 | |
| 17 | 4 | RAL 5024 - Opak Blau | A | 49,76 | -6,87 | -20,59 | 0,06 | 0,02 | 0,09 | |
| 18 | 4 | RAL 5024 - Opak Blau | C | 57,43 | -6,71 | -36,57 | 0,53 | 0,24 | 0,57 | |
| 19 | 4 | RAL 5024 - Opak Blau | B | 49,39 | -7,09 | -19,44 | 0,01 | 0,02 | 0,03 | |
| 20 | 5 | RAL 1019 - Opak Gelb | A | 64,89 | 3,87 | 19,48 | 0,06 | 0,02 | 0,04 | |
| 21 | 5 | RAL 1019 - Opak Gelb | c | 65,65 | 4,85 | 21,7 | 1,51 | 0,84 | 1,56 | |
| 22 | 5 | RAL 1019 - Opak Gelb | B | 68,34 | 3,69 | 16,8 | 0,02 | 0,03 | 0,04 | |
| 23 | 6 | Transparent Grün | B | 78,87 | -33,00 | 109,34 | 0,23 | 0,17 | 0,17 | |
| 24 | 6 | Transparent Grün | A | 79,29 | -35,15 | 108,75 | 0,04 | 0,07 | 0,09 | |
| 25 | 6 | Transparent Grün | C | 79,05 | -35,24 | 108,79 | 0,06 | 0,12 | 0,08 | |

### Interpretation der Versuchsergebnisse:

Mit der erfindungsgemäßen Technologie (Kombination von Akustikmischer und statischen Mischelementen in der Spritzgießmaschine) kann man die gleichen Ergebnisse bei der Farbeinstellung erzielen wie bei der herkömmlichen Verfahrensweise (Herstellung von Granulat auf einem Doppelwellenextruder mit anschließender Herstellung der Platten mit einer Spritzgießmaschine), jedoch bei erheblich reduzierten Zeitaufwand. Ohne Verwendung eines Akustikmischers erhält man Farbmusterplatten mit sehr abweichenden Farbmesswerten, teilweise sogar mit deutlichen Inhomogenitäten in Form von Farbschlieren.

### Zeiteinsparung (siehe Tabelle 3):

Mit dem erfindungsgemäßen Verfahren kann die Herstellung entsprechender Farbmusterplatten und die Rezepturentwicklung von neuen Rezepturen, die ein definiertes neues Farbziel haben, erheblich beschleunigt werden. Mit dem Verfahren A werden nur 500 g benötigt, im Verfahren B jedoch 5 kg. Mit Verfahren A kann somit die Menge an Material deutlich eingespart werden.

**Tab. 3:) Zeitaufwand für die Verfahren A (erfindungsgemäße Technologie) und B (Standardtechnologie)**

| Verfahrensschritte | Verfahren A [Minuten] | Verfahren B [Minuten] |
|---|---|---|
| Trocknen | 240 | 240 |
| Spritzgussmaschine reinigen | 15 | n.z. |
| Extruder reinigen | n.z.* | 60 |
| Mischer reinigen | n.z.* | 30 |
| Herstellung Mischung | 15 | 25 |
| Extrusion | n.z.* | 30 |
| Trocknen Granulate | n.z.* | 240 |
| Herstellung Farbmusterplatten | 15 | 15 |
| | 285 | 640 |

| | | |
|---|---|---|
| *n.z. = nicht zutreffend | | |

## Patentansprüche

1. Verfahren zur Herstellung von additivierten thermoplastischen Farbmusterplatten zur Farbeinstellung oder Farbnachstellung von Additiv-Thermoplast-Mischungen, enthaltend die Schritte:
a.) Herstellung einer Vormischung nach dem Resonanz-Vibrations-Mischprinzip, enthaltend als Komponenten mindestens einen thermoplastischen Kunststoff und ein oder mehrere Additive wobei mindestens eines der Additive ein Farbmittel ist und
b.) Thermoplastische Verarbeitung der Vormischung auf einer Spritzgießmaschine enthaltend statische und/oder dynamische Mischelemente.

2. Verfahren nach Anspruch 1, **dadurch gekennzeichnet, dass** die Vormischung mit Frequenzen von > 16 Hz und < 1000 Hz hergestellt werden.

3. Verfahren nach einem der vorangehenden Ansprüche, **dadurch gekennzeichnet, dass** der thermoplastische Kunststoff in einer der folgenden Formen vorliegt:
a. zylindrisches Granulat mit einer Länge von 0,5 mm bis 10,0 mm und einem Durchmesser von 0,5 mm bis 6,0 mm und einem 100 Korngewicht von 1,0 g bis 4,0 g;
b. kugelförmiges Granulat mit einem Durchmesser von 0,5 mm bis 6,0 mm und einem 100 Korngewicht von 1,0 g bis 4,0 g;
c. Pulver mit einer mittleren Teilchengröße von 0,01 mm bis 5,00 mm und einer monomodale oder bimodalen Teilchengrößenverteilung

4. Verfahren nach einem der vorangehenden Ansprüche, **dadurch gekennzeichnet, dass** man das Additiv als Pulver mit Teilchengrößen von 0,01 mm bis 2,00 mm und einer monomodalen oder bimodalen Teilchengrößenverteilung einsetzt.

5. Verfahren nach einem der vorangehenden Ansprüche, **dadurch gekennzeichnet, dass** der thermoplastische Kunststoff ausgewählt ist ausPolyamid (PA), Polyester, insbesondere Polyethylenterephthalat (PET), Polybutylenterephthalat (PBT), Polyacrylate, insbesondere Polymethylmethacrylat (PMMA), Polystyrol (PS), syndiotaktisches Polystyrol, Acrylnitril-Butadien-Styrol (ABS), Acrylester-Styrol-Acrylnitril (ASA), Polyolefin, insbesondere Polypropylen (PP), Polyethylen (PE), Polycarbonat (PC), Copolycarbonat (CoPC), Copolyestercarbonat oder eine Mischung dieser Kunststoffe.

6. Verfahren nach Anspruch 5, **dadurch gekennzeichnet, dass** es sich bei den Kunststoffen um amorphe thermoplastische Kunststoffe, insbesondere um Polycarbonat, Copolycarbonat, Copolyestercarbonat und Polycarbonat - Mischungen bestehend aus Polycarbonat und AcrylnitrilButadien-Styrol (ABS), Acrylester-Styrol-Acrylnitril (ASA), Polybutylenterephthalat (PBT) und Polyethylenterephthalat (PET) handelt.

7. Verwendung von additivierten Farbmusterplatten erhältlich nach einem Verfahren gemäß einem der Ansprüche 1 bis 6 zur zur Farbeinstellung oder Farbnachstellung von Additiv-Thermoplast-Mischungen.

## Claims

1. Method for producing additized thermoplastic colour sample sheets for the colour setting or colour matching of additive/thermoplastic mixtures, comprising the steps:
a.) preparation of a premixture according to the resonance-vibration mixing principle containing as components at least one thermoplastic plastic and one or more additives, at least one of the additives being a colouring agent, and
b.) thermoplastic processing of the premixture in an injection moulding machine containing static and/or dynamic mixing elements.

2. Method according to claim 1, **characterised in that** the premixture is prepared with frequencies of > 16 Hz and < 1000 Hz.

3. Method according to any one of the preceding claims, **characterised in that** the thermoplastic plastic is present in one of the following forms:
a. cylindrical granulate having a length of from 0.5 mm to 10.0 mm and a diameter of from 0.5 mm to 6.0 mm and a 100-grain weight of from 1.0 g to 4.0 g;
b. spherical granulate having a diameter of from 0.5 mm to 6.0 mm and a 100-grain weight of from 1.0 g to 4.0 g;
c. powder having a mean particle size of from 0.01 mm to 5.00 mm and a monomodal or bimodal particle size distribution.

4. Method according to any one of the preceding claims, **characterised in that** the additive is used in the form of a powder having particle sizes of from 0.01 mm to 2.00 mm and a monomodal or bimodal particle size distribution.

5. Method according to any one of the preceding claims, **characterised in that** the thermoplastic plastic is selected from polyamide (PA), polyesters, in particular polyethylene terephthalate (PET), polybutylene terephthalate (PBT), polyacrylates, in particular polymethyl methacrylate (PMMA), polystyrene (PS), syndiotactic polystyrene, acrylonitrile-butadiene-styrene (ABS), acrylic ester-styrene-acrylonitrile (ASA), polyolefin, in particular polypropylene (PP), polyethylene (PE), polycarbonate (PC), copolycarbonate (CoPC), copolyester carbonate, or a mixture of these plastics.

6. Method according to claim 5, **characterised in that** the plastics are amorphous thermoplastic plastics, in particular polycarbonate, copolycarbonate, copolyester carbonate and polycarbonate mixtures consisting of polycarbonate and acrylonitrile-butadiene-styrene (ABS), acrylic ester-styrene-acrylonitrile (ASA), polybutylene terephthalate (PBT) and polyethylene terephthalate (PET).

7. Use of additized colour sample sheets obtainable by a method according to any one of claims 1 to 6 for the colour setting or colour matching of additive/thermoplastic mixtures.

## Revendications

1. Procédé de fabrication de plaques-échantillons colorées thermoplastiques, contenant des additifs, pour le réglage de la couleur ou le post-réglage de la couleur de mélanges additif-thermoplastique, comprenant les étapes :
a. préparation d'un mélange préalable selon le principe de mélange de résonance-vibration, contenant comme composants au moins un matériau synthétique thermoplastique et un ou plusieurs additifs, au moins un des additifs étant un colorant, et
b. transformation thermoplastique du mélange préalable sur un machine de moulage par injection contenant des éléments de mélange statiques et/ou dynamiques.

2. Procédé selon la revendication 1, **caractérisé en ce que** le mélange préalable est préparé à des fréquences > 16 Hz et < 1000 Hz.

3. Procédé selon l'une quelconque des revendications précédentes, **caractérisé en ce que** le matériau synthétique thermoplastique se trouve sous une des formes suivantes :
a. granulat cylindrique d'une longueur de 0,5 mm à 10,0 mm et d'un diamètre de 0,5 mm à 6,0 mm et présentant un poids de granule 100 de 1,0 g à 4,0 g ;
b. granulat sphérique présentant un diamètre de 0,5 mm à 6,0 mm et un poids de granule 100 de 1,0 g à 4,0 g ;
c. poudre présentant une grosseur moyenne de particule de 0,01 mm à 5,00 mm et une répartition monomodale ou bimodale de la grosseur des particules.

4. Procédé selon l'une quelconque des revendications précédentes, **caractérisé en ce qu'**on utilise l'additif sous forme de poudre présentant des grosseurs de particule de 0,01 mm à 2,00 mm et une répartition monomodale ou bimodale de la grosseur des particules.

5. Procédé selon l'une quelconque des revendications précédentes, **caractérisé en ce que** le matériau synthétique thermoplastique est choisi parmi le polyamide (PA), le polyester, en particulier le poly(téréphtalate d'éthylène) (PET), le poly(téréphtalate de butylène) (PBT), les polyacrylates, en particulier le poly(méthacrylate de méthyle) (PMMA), le polystyrène (PS), le polystyrène syndiotactique, l'acrylonitrile-butadiène-styrène (ABS), l'ester d'acryle-styrène-acrylonitrile (ASA), les polyoléfines, en particulier le polypropylène (PP), le polyéthylène (PE), le polycarbonate (PC), le copolycarbonate (CoPC), le copolyestercarbonate ou un mélange de ces matériaux synthétiques.

6. Procédé selon la revendication 5, **caractérisé en ce qu'**il s'agit, pour les matériaux synthétiques, de matériaux synthétiques thermoplastiques amorphes, en particulier de polycarbonate, de copolycarbonate, de copolyestercarbonate et de mélanges de polycarbonates, constitués par du polycarbonate et de l'acrylonitrile-butadiène-styrène (ABS), de l'ester d'acryle-styrène-acrylonitrile (ASA), du poly(téréphtalate de butylène) (PBT) et du poly(téréphtalate d'éthylène) (PET).

7. Utilisation de plaques-échantillons contenant des additifs, pouvant être obtenues selon un procédé selon l'une quelconque des revendications 1 à 6 pour le réglage de la couleur ou le post-réglage de la couleur de mélanges additif-thermoplastique.
